(19) Europäisches Patentamt
European Patent Office
Office européen des brevets

(11) Veröffentlichungsnummer: **0 056 167**
**B1**

(12) # EUROPÄISCHE PATENTSCHRIFT

(45) Veröffentlichungstag der Patentschrift: **26.02.86**

(51) Int. Cl.⁴: **C 08 G 18/80**, C 09 D 3/72, B 05 D 7/14, C 08 G 18/58

(21) Anmeldenummer: **81110861.2**

(22) Anmeldetag: **31.12.81**

(54) **Feste polymere Bindemittel für wärmehärtende Pulverlacke auf der Basis von carboxylgruppenhaltigen Polyurethanpräpolymeren mit verkappten Isocyanatgruppen, diese Bindemittel enthaltende Pulverlacke und lackierte Metallgegenstände.**

(30) Priorität: **08.01.81 IT 1904281**

(43) Veröffentlichungstag der Anmeldung: **21.07.82 Patentblatt 82/29**

(45) Bekanntmachung des Hinweises auf die Patenterteilung: **26.02.86 Patentblatt 86/9**

(84) Benannte Vertragsstaaten: **AT BE CH DE FR GB IT LI NL SE**

(56) ƽegenhaltungen:
**ɛ -A-0 017 215**
**DE-A-2 708 611**

**Die Akte enthält technische Angaben, die nach dem Eingang der Anmeldung eingereicht wurden und die nicht in dieser Patentschrift enthalten sind.**

(73) Patentinhaber: **HOECHST AKTIENGESELLSCHAFT, Postfach 80 03 20, D-6230 Frankfurt am Main 80 (DE)**

(72) Erfinder: **Farronato, Silvestro, via Sturzo 39, Romano d'Ezzelino (Vicenza) (IT)**
Erfinder: **Gazzea, Sergio, via Monte Cauriol 15, Bassano del Grappa (Vicenza) (IT)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 056 167 B1

LIBER, STOCKHOLM 1986

**Beschreibung**

Die Erfindung betrifft Gegenstände, die mit wärmehärtenden Pulverlacken beschichtet sind, sowie ein Verfahren zur Herstellung derartiger Beschichtungen.

Im folgenden bezieht sich "homofunktionell" auf eine mit verkappten Polyisocyanaten reaktionsfähige Verbindung, die einen einzigen Typ funktioneller Gruppen aufweist, nämlich Hydroxyl oder Epoxid. "Heterofunktionell" bezieht sich dagegen auf eine mit verkappten Polyisocyanaten reaktionsfähige Verbindung mit verschiedenen funktionellen Gruppen, die nebeneinander in dem Molekül vorhanden sind, wovon wenigstens eine Epoxyd und/oder Hydroxyl ist neben z.B. carboxyl und/oder Anhydrid. Geeignet sind z.B. Verbindungen mit Epoxyd und Hydroxyl, Carboxyl und Hydroxyl, Hydroxyl einerseits und Carboxyl und/oder Anhydrid usw.. Die vorliegende Erfindung betrifft ferner wärmehärtende Pulverlacke, deren Bindemittel aus einem oder mehreren festen polymeren erfindungsgemäßen Bindemitteln besteht.

Pulverlacke wurden bekanntlich um die sechziger Jahre in den Vereinigten Staaten von Amerika entwickelt und hauptsächlich zur inneren Beschichtung von Röhren mit einer Lackschichtdicke bis zu 300 µm verwendet. Der entscheidende Anstoß zu ihrer Entwicklung und Verwendung kam jedoch aus Europa, wo im Jahre 1966 in der Bundesrepublik Deutschland die erste Anlage zur elektrostatischen Aufbringung von Pulverlacken in Betrieb gesetzt wurde.

Ökonomische und ökologische Faktoren, wie Energie- und Personalersparnis, Verminderung der Verluste und der Umweltverunreinigung spornten die Forscher dazu an, immer neue Anwendungsgebiete für diese Lacke zu finden, ihre Eigenschaften zu verbessern und ihre Nachteile zu vermindern. Zur Zeit werden Pulverlacke zur inneren Beschichtung von Rohrleitungen zur Beförderung von Erdölprodukten und anderen flüssigen oder gasförmigen Produkten, die gewöhnlich unter dem englischen Ausdruck "pipelines" bekannt sind, zur Lackierung des Karosseriekörpers von Autos nach dem "Revers"-Verfahren, als Lacküberzug für Metallverschlüsse, Metallmöbel, Fahrräder, Nähmaschinen und andere Metallgegenstände verwendet. Pulverlacke sind zur Herstellung von isolierten elektrischen Drähten und zur Lackierung von elektrischen Haushaltsgeräten vorgeschlagen worden. Sie haben jedoch auf diesem Gebiet noch keine befriedigenden Resultate gebracht.

Die Vorteile, die die Pulverlacke bieten, sind verschiedener Natur: ökonomische, sicherheitsgewährende, umweltschützende und technische. Im einzelnen kann folgendes angeführt werden:

Bei der Handaufbringung bedarf es keines Fachpersonals und dieselbe kann auch automatisiert werden. Der Energieaufwand ist bei der Pulverlackierung geringer als bei flüssiger Lackierung, da die Pulverlacke weder organische Lösemittel noch Wasser enthalten, die beim Einbrennen verdampft werden müssen. Dank der Abwesenheit von entflammbaren Lösungsmitteln sind die Versicherungskosten für Anlagen, in denen Pulverlacke verwendet werden, bedeutend niedriger als für solche, wo man gelöste Lacke benützt. Auch die Verunreinigung der Umwelt ist praktisch null, da nur sehr geringe Menge von Pulver in die Atmosphäre gelangen können, wenn ein adäquates System zur Abscheidung und Rückgewinnung des Pulvermaterials vorhanden ist. Die Arbeitsbedingungen sind gesünder, da weder Lösungsmitteldämpfe noch übler Geruch auftreten.

Darüberhinaus entfallen die Antrocknungszeiten der Lackschichten. Der lackierte Gegenstand wird direkt zum Einbrennofen befördert, was eine Verkürzung des Lackierungsvorgangs zur Folge hat. Weil kein Lösungsmittel verdampft werden muß und infolgedessen keine Mängel durch Verdampfung des Lösungsmittels entstehen, ist es möglich, mit nur einer beschichtung aus bei beträchtlicher Dicke einen gleichmäßigen Anstrichfilm zu erhalten. Man erzielt darüberhinaus eine bessere Beschichtung von Unregelmäßigkeiten auf der Oberfläche, sowie der Ecken und Kanten. Ferner ist die Porosität des Pulverlackfilms viel geringer, was zu einer Verbesserung der chemischen und mechanischen Beständigkeit führt.

Andere dem Pulverlack eigene Eigenschafen sind durch die Tatsache gegeben, daß das Produkt zum Gebrauch fertig ist, ohne daß der Verbraucher die Viskosität kontrollieren oder korrigieren muß und auch dadurch, daß etwaige Mängel in der Lackierung leicht vor dem Einbrennen im Ofen behoben werden können.

Pulverlacke haben gegenüber den herkömmlichen wärmehärtenden Lacken auf Lösungsmittelbasis nur wenige Nachteile. Diese sind: der Übergang auf eine andere Farbe ist in Anlagen mit nur einer Kabine sehr viel arbeitsaufwendiger; man kann keine Farbe durch Mischen von zwei oder mehr Lacken herstellen, man kann keine kastenartigen Teile lackieren.

Aus der DD—PS 55 820 sind wärmehärtende Pulverlacke zur Aufbringung nach dem Staubfließverfahren (Wirbelsinterverfahren), durch elektrostatisches Spritzen oder Besprühen und nachfolgende Härtung des Lackfilms durch Erhitzen bekannt. Die Lacke werden nach diesem deutschen Patent durch pulverförmige Mischungen aus hydroxylgruppenhaltigen Polyestern und mit Phenol verkappten Polyisocyanaten hergestellt. Die Anwendung von Phenol zur Verkappung der Isocyanatgruppen bringt bekanntlich schwere Nachteile für das Arbeitsmilieu mit sich. Ferner ist die Reaktivität dieser Produkte nicht immer hinreichend, nicht einmal in Gegenwart von Katalysatoren, so daß es zur Bildung von Blasen im Lackfilm und zu anderen Verlaufsstörungen kommen kann, die die Bildung einer guten Lackoberfläche beeinträchtigen.

Aus der DE—OS 20 47 718 sind urethangruppen- und carbonsäureestergruppenhaltige Lackbindemittel, vor allem für Pulverlacke bekannt, die außer mit Isocyanaten reaktionsfähigen aktiven Wasserstoff-

atomen auch mit ε-Caprolactam verkappte Isocyanatgruppen enthalten und die durch Erhitzen auf Temperaturen oberhalb etwa 140°C, vorzugsweise 170°C bis 210°C vernetzen könne. Die nach dieser DE—OS erhaltenen Bindemittel unterscheiden sich unabhängig vom Auftragsverfahren von den vorher bekannten durch einen besseren Verlauf. Im Fall der Pulverlacke schreibt man den oben erwähnten Bindemitteln gegenüber den mit Phenol verkappten Isocyanaten (siehe DD—PS 55 820) den weiteren Vorteil zu, daß sie keine Phenole abspalten und somit nicht zu einer Umweltbelastung, nicht zuletzt auch am Arbeitsplatz führen.

Trotzdem benötigen auch die aus der DE—OS bekannten Bindemittel, da sie durch Umsetzung von ausschließlich freie Hydroxylgruppen enthaltenden Polymeren mit verkappten Polyisocyanaten gewonnen werden, eine beachtliche Menge von verkappten Polyisocyanaten und setzen damit eine beachtliche Menge von ε-Caprolactam oder anderen Verkappungsmitteln während des Einbrennvorganges frei. Außerdem ist die chemische Beständigkeit unbefriedigend. Das ist auf die geringe Vernetzungsdichte des gehärteten Lackfilms zurückzuführen, da die Vernetzung beim Einbrennvorgang nur zwischen Isocyanat- und Hydroxylgruppen erfolgt und man somit eine nicht ausreichend dichte Vernetzung erzielt, was zu einer begrenzten chemischen Beständigkeit führt.

Aus der DE—OS 2 708 611 ist ein Verfahren zur Herstellung von Polyurethan-Präpolymeren bekannt, die Carboxylgruppen und verkappte Isocyanatgruppen enthalten. In dieser Anmeldung wird auch die Verwendung dieser Präpolymeren zur Herstellung von polymeren Bindemitteln für wärmehärtende Lacke, die entweder in wäßrigen Lösungen, wäßrigen Dispersionen, in nicht-wäßrigen Lösungen oder ohne Lösungsmittel (natürlich nur im Falle, daß das Bindemittel selbst flüssig ist) oder letzten Endes in Pulverform angewendet werden können, beschrieben. Allerdings geben die dieser DE—OS gemäß hergestellten Bindemittel in Wirklichkeit keine Pulverlacke mit befriedigender Qualität, da, weil sie vor allem als wasserlösliche Produkte vorgesehen sind, die Carboxylgruppen der Polyurethan-Präpolymeren den Epoxygruppen gegenüber überwiegen und deshalb die nach dem Einbrennen frei bleibenden Carboxylgruppen leicht durch Chemikalien anfällig sind.

Es ist deshalb Aufgabe der vorliegenden Erfindung, feste polymere Bindemittel für Pulverlacke zu schaffen, die nicht die genannten Nachteile der bekannten Bindemittel aufweisen und die es erlauben, wärmehärtende Pulverlacke herzustellen, die leicht mit den herkömmlichen Techniken, z.B. nach dem Staubfließverfahren oder mittels Verspritzen in einem elektrischen Feld (elektrostatisches Pulversprühverfahren=EPS-Verfahren) aufgetragen werden können und fehlerfreie, glatte, glänzende Überzüge mit ausgezeichneter Haftung, bestehen mechanischen Eigenschaften, beachtlicher chemischer Beständigkeit und Wetterbeständigkeit ergeben.

Eine weitere Aufgabe der vorliegenden Anmeldung ist es, wärmehärtende Pulverlacke zu schaffen, die außer daß sie zur Lackierung von Metallgegenständen allgemein verwendet werden können, vor allem zur Lackierung von elektrischen Haushaltsgeräten, Metalldrähten, insbesondere von elektrischen Leitungsdrähten geeignet sind.

Diese und andere Aufgaben der vorliegenden Erfindung werden aus der Beschreibung und den folgenden Beispielen klar ersichtlich.

Diese Aufgaben werden erfindungsgemäß gelöst durch Gegenstände die mit einem wärmehärtenden Pulverlack lackiert sind, der ein homogenes Gemisch ist aus

I) einem festen polymeren Bindemittel, das eine Kombination ist von

A) einem carboxylgruppenhaltigen Polyurethan-Präpolymeren, gebildet durch die Reaktion

$$xM—H+(OCN)_x—R^1—(NCO)_y+(HO)_y—R^2—(COOH) \quad MCONH)_x—R^1—(NHCOO)_y—R_2—(COOH)_n,$$

worin

M—H eine ein aktives Wasserstoffatom enthaltende, zur Reaktion mit einem Isocyanat befähigte Verbindung ist, $R^1$ und R gleiche oder verschiedene aliphatische, cycloaliphatische oder aromatische Reste sind und x, y und n gleiche oder verschiedene ganze Zahlen von 1 bis 15, vorzugeweise von 1 bis 10 sind, deren Summe höchstens 30, vorzugsweise höchstens 15 beträgt, das 1 bis 40 Gew.-% mit anderen Verkappungsmitteln als solchen mit einer >NOH-gruppe verkappte Isocyanatgruppen enthält und eine Säurezahl von 1 bis 80 hat, wobei der Restgehalt an nicht verkappten Isocyanatgruppen vorzugsweise nicht mehr als 0,5 Gew.-% freies NCO beträgt, mit

B) wenigstens einer homo- und/oder heterofunktionellen Verbindung, die entweder Hydroxylgruppen enthält oder diese durch Reaktion bilden kann, wobei die Kombination in der Weise erfolgt ist, daß in den vernetzten Produkten der Gehalt an COOH-Gruppen nicht höher als 0,718% vom Gewicht der Komponenten A) und B) ist, mit

II) mindestens einem üblichen Zusatzstoff wie Füllstoffen, Pigmenten, Thixotropiemitteln, Katalysatoren, Verlaufmitteln Oxidationshemmern und Farbstoffen.

Die Umsetzung der 3 Komponenten zum Präpolymeren wird so durchgeführt, daß die nicht verkappten Isocyanatgruppen im wesentlichen, z.B. bis auf einen Restgehalt von nicht mehr als 0,5 Gew.-% freies NCO,

durch Hydroxylgruppen kompensiert werden. Die verkappten Isocyanatgruppen werden dann unter Einbrennbedingungen mit verbliebenen freien oder unter den Einbrennbedingungen aus z.B. Carboxyl- und Epoxydgruppen gebildeten Hydroxylgruppen umgesetzt.

Insbesondere können diese Bindemittel durch folgende Kombinationen erhalten werden:

Präpolymeres+epoxygruppenhaltige Verbindungen

Präpolymeres+epoxygruppenhaltige Verbindung+hydroxylgruppenhaltige Verbindungen

Präpolymeres+epoxygruppenhaltige Verbindungen+carboxylgruppenhaltige Verbindungen

Präpolymeres+epoxygruppenhaltige Verbindungen+hydroxylgruppenhaltige Verbindungen+carboxylgruppenhaltige Verbindungen

Pràpolymeres+epoxygruppenhaltige Verbindungen+hydroxylgruppenhaltige Verbindungen+anhydridgruppenhaltige Verbindungen

Präpolymeres+hydroxylgruppenhaltige Verbindungen+carboxylgruppenhaltige Verbindungen+anhydridgruppenhaltige Verbindungen

Präpolymeres+hydroxylgruppenhaltige Verbindungen+anhydridgruppenhaltige Verbindungen

Präpolymeres+epoxy- und hydroxylgruppenhaltige Verbindungen

Präpolymeres+epoxygruppenhaltige Verbindungen+anhydrid- und carboxylgruppenhaltige Verbindungen

Präpolymeres+hydroxyl- und carboxylgruppenhaltige Verbindungen und im allgemeinen Präpolymeres+homofunktionelle Verbindung+heterofunktionelle Verbindung

Bevorzugt werden die Präpolymeren mit homo- und/oder heterofunktionellen Verbindungen umgesetzt, die Gruppen enthalten, die ohne Bildung von flüchtigen Verbindungen mit Carboxylgruppen reagieren können.

Der Ausdruck "Präpolymeres" steht in dieser Beschreibung für ein carboxylgruppenhaltiges Polyurethan-Präpolymeres mit verkappten Isocyanatgruppen. Die Zusammensetzung dieses Präpolymeren wird im folgenden näher erläutert werden.

Die Präpolymeren, die zur Herstellung der erfindungemäßen festen polymeren Bindemittel geeignet sind, werden z.B. nach dem in der DE—OS 2 708 611 beschriebenen Verfahren erhalten, indem man ein Isocyanat, das in seinem Molekül mindestens zwei freie Isocyanatgruppen aufweist, mit einer Hydroxycarbonsäure und einem Verkappungsmittel, d.i. einer weiteren, aktiven Wasserstoff enthaltenden und zur Umsetzung mit einer Isocyanatgruppe befähigten Verbindung umsetzt nach dem Schema

$$x(M—H)+(OCN)_x—R^1—(NCO)_y+(HO)_y—R^2—(COOH)_n \rightarrow (MCONH)_x—R^1—(NHCOO)_y—R^2—(COOH)_n$$

wobei M—H eine Verbindung ist, die ein aktives, zur Reaktion mit einem Isocyanat befähigtes Wasserstoffatom enthält, $R^1$ und $R^2$ gleiche oder verschiedene aliphatische, cycloaliphatische oder aromatische Reste sind und x, y und n gleiche oder verschiedene ganze Zahlen von 1 bis 15, vorzugsweise 1 bis 10 sind, deren Summe höchstens 30, vorzugsweise höchstens 15 beträgt. Diese Umsetzung soll in der Weise erfolgen, daß sich aus dem Polyisocyanat und der Hydroxycarbonsäure praktisch hydroxylgruppenfreie, wenigstens oligomere Produkte bilden.

Als Ausgangsprodukte für die Polyurethan-Präpolymeren kann man übliche Polyisocyanate verwenden, wie 2,4- oder 2,6- Toluylendiisocyanat, Xylylendiisocyanat, Diphenylmethan-4,4'-diisocyanat, Triphenylmethyl-4,4',4''-triisocyanat, Triphenylmethantriisocyanat Polyphenyl-polymethyl-isocyanat, Isophorondiisocyanat, Hexamethylendiisocyanat, 2,2,4(2,4,4)-Trimethylhexamethylendiisocyanat, Methylcyclohexyldiisocyanat, Dicyclohexylmethyldiisocyanat, Diäthylfumarhexylisocyanat, Bis-(3-Methyl-4-isocyanatocyclo-hexyl-)methan, 2,2-Bis-(4-isocyanatocyclohexyl-)propan, den Methylester des Lysindiisocyanats, das Biuret des Hexamethylendiisocyanats, Diisocyanate dimerer Säuren, 1-Methyl-benzol-2,4,5-triisocyanat, Biphenyl-2,4,4'-triisocyanat, das Triisocyanat aus 3 Mol Hexamethylendiisocyanat und 1 Mol Wasser mit 16% NCO-Gehalt und weitere wenigstens zwei NCO-Gruppen pro Molekül enthaltende Verbindungen.

Als Hydroxycarbonsäuren verwendet man Verbindungen, die mindestens eine —OH und eine —COOH-Gruppe pro Molekül enthalten, wie Glykolsäure, Salizylsäure, Weinsäure, p-Hydroxybenzoesäure, Dimethylolpropionsäure, Äpfelsäure, Rizinolsäure, Phenylglykolsäure, 4,4-Bis-(4-hydroxyphenyl)-Pentansäure und andere.

Als Verkappungsmittel M—H kann man z.B. Verbindungen verwenden, die ein aktives Wasserstoffatom enthalten, wie Phenol, 2,4-Diisobutylphenol, Brenzcatechin, Kresol, Isooctylphenol, p-tert.-Butylphenol, Phenylphenol oder cyclische Verbindungen mit einer —CO—NH-Gruppe wie α-Pyrrolidon, Piperidon-2, ε-Caprolactam, Äthylmalonat, Acetessigsäureäthylester, 1-Phenyl-3-methyl-5-pyrazolon, Diphenylamin, Acylmercaptane, aliphatische Mercaptane, 4-Hydroxydibenzyl,, 6-Hydroxytetrahydronaphtalin, einwertige Alkohole mit 1 bis 6 C-Atomen wie Methanol, Äthanol, n- und iso-Propanol, die verschiedenen Butanole, Pentanole und Hexanole, tertiäre Monoalkoholamine wie Dimethyläthanolamin, Diäthyläthanolamin, Dimethylisopropanolamin, 3-Dimethylaminopropanol, 1-Diäthylaminobutanol-2, Diisopropyläthanolamin, Äthyloxyäthylanilin, N,N-Dimethyl-meta-aminophenol, N,N-Diäthyl-meta-aminophenol, 1,3-Bis-(dimethylamino)-2-propanol, 4,4-Bis-(dimethylamino)benzhydrol, Aziridinäthanol, N-β-Hydroxyäthylmorpholin, N-β-Hydroxyäthylpyrrolidin, 3-Hydroxy-N-methylpiperidin, 4-Hydroxy-N-methylpiperidin, N-Hydroxypiperidin und andere mehr.

Die gleichzeitige Anwesenheit zweier verschieden-funktioneller Gruppen im Molekül der Präpolymeren, d.h. der Carboxylgruppen und der verkappten Isocyanatgruppen, verlieht diesen Präpolymeren eine vorzügliche Anpassungsfähigkeit an die jeweiligen technischen Gegebenheiten, da beide funktionelle Gruppen an der Vernetzungsreaktion beteiligt sind und zu Polymeren mit stark ausgeprägter dreidimensionaler Struktur mit größerer Vernetzungsdichte führen.

Erfindungsgemäß können die zur Herstellung von Pulverlacken geeigneten polymeren Bindemitel auf der Basis der Präpolymeren hergestellt werden, indem man als Partner der Vernetzungsreaktion z.B. folgende Verbindungen verwendet:

B,A) Gesättigte oder ungesättigte, alliphatische oder cycloaliphatische, aromatische oder heterocyclische Epoxyverbindungen. Bevorzugte Epoxyverbindungen sind:

1) Poly-(Epoxyalkyl)-Äther aliphatischer oder cycloaliphatischer Polyhydroxyverbindungen, wie des Trimethylloläthans, Trimethylolpropans, Tris(hydroxyäthyl)-isocyanurats, Glyzerins, Pentaerythrits.
2) Umsetzungsprodukte von Epihalogenhydrinen, wie Epichlorhydrin mit monomeren mehrwertigen Phenolen wie 2,2-Bis(4-Hydroxyphenyl)-propan, 1,1-Bis(4-Hydroxyphenyl)-äthan, Bis(4-Hydroxyphenyl)-methan, 4,4'-Dihydroxydiphenylsulfon, Hydrochinon. Resorcin Dihydroxydiphenyl, Dihydroxynaphthalin, ferner das Trisglycidylisocyanurat.
3) Glycidyläther von mehrwertigen phenolischen Verbindungen wie Novolaken und Resolen, gewonnen aus der Kondensation des Phenols und/oder der Kresole mit Formaldehyd.
4) Polyglycidylester von Polycarbonsäuren wie Diglycidylester der Phthalsäure, Isophthalsäure, Terephthalsäure, Tetrahydrophthalsäure, Hexahydrophthalsäure oder aus Polyestern abgeleitete Polyglycidylester oder auch Verbindungen mit freien Carbonsäuregruppen.
5) Feste Acrylharze mit Glycidylgruppen.

B,B) Verbindungen mit mehr als einer freien Hydroxylgruppe, wie gesättigte oder ungesättigte Polyester, Polyäther, hydroxylierte Alkyd- und Acrylharze, Pentaerythrit, Trimethyloläthan bzw. -propan, Glycerin, Lactone, Polylactone.

B,C) Carboxylverbindungen mit mehr als einer freien Carboxyl- oder Anhydridgruppe, wie gesättigte oder ungesättigte Polyester, Alkydharze und Acrylharze, jedoch in Kombination mit Verbindungen gemäß B,A und/oder B,B.

Die erfindungsgemäßen festen polymeren Bindemittel sind besser als die bekannten binären Bindemittel, sowohl vom chemischen als vom mechanischen Standpunkt aus gesehen, gerade wegen der kettenbildenden Reaktion zwischen den zwei oder mehreren Komponenten, aus denen das erfindungsgemäße feste polymere Bindemittel gebildet wird.

Die mit den erfindungsgemäßen festen Bindemitteln erhaltenen Lacke können außer Farbstoffen oder Pigmenten auch einen oder mehrere der üblichen zur Herstellung von Pulverlacken verwendeten Zusätze enthalten, wie Füllstoffe, Verlaufmittel, Oxydationshemmer usw.. Um die Einbrennzeit und die Einbrenntemperaturen zu vermindern, kann man Beschleuniger und Katalysatoren einsetzen, wie Zinknaphthenat und -octoat, Zinnoctoat, Dibutylzinndilaurat, Lithiumbenzoat und -hydroxyd, Zinn- und Zinkchlorid, Titan-, Vanadin- und Zirkon-alkoholate, Metallsalze von organischen Carbonsäuren, quaternäre Ammonium- und Phosphoniumsalze, Salze der Phosphorsäure, Amine und Amidine, substituierte und nicht substituierte Harnstoffe und Polyharnstoffe, Pyrazolone, Pyrimidine, Imidazol und dessen Derivate. Weitere Zusätze sind z.B. aromatische Diketone wie Benzoin, die punktuelle Zersetzungen unterbinden und damit die Porenbildung herabdrücken. Diese werden im allgemeinen in Mengen von 0,1—3, vorzugsweise von 0,2 bis 2 Gew.-%, bezogen auf das Bindemittel, eingesetzt.

Die mit den erfindungsgemäßen festen polymeren Bindemitteln hergestellten Pulverlacke können mit den üblichen Mischapparaten erzeugt werden, wie Extruder, Doppel-Z-mischer und ähnliche, indem man zusammen mit den obengenannten polymeren Präpolymeren zusätzliche Vernetzer und eventuell die üblichen in der Lackindustrie verwendeten Zusätze, wie Pigmente, Verlaufmittel, Thixotropiermittel, Füllstoffe und Katalysatoren (siehe oben) einsetzt.

Die mit den erfindungsgemäßen festen polymeren Bindemitteln erhaltenen Pulverlacke können leicht auf die übliche Weise, wie nach dem Staubfließverfahren oder nach dem elektrostatischen Pulversprühverfahren, und darauf folgendes Einbrennen der Lackschicht bei Temperaturen über 100°C, vorzugsweise 140—220°C, appliziert werden, wobei man eine Lackschicht mit ausgezeichneten mechanischen Eigenschaften sowie sehr guter chemischer Beständigkeit und Wetterbeständigkeit erhält. Auch wenn eines oder mehrere Produkte, welche in dem erfindungsgemäßen Bindemittel enthalten sind, nicht in fester Form vorhanden sind, ist es wichtig, daß die wärmehärtenden Pulverlacke nach der Homogenisierung, der Zermahlung und der Siebung pulverig sind und nicht während der Aufbewahrung zusammenbacken und zusammenballen. Die erfindungsgemäßen Pulverlacke entsprechen vollkommen diesen Anforderungen.

Die folgenden Beispiele erläutern die Erfindung. Unter "Teile" sind jeweils "Gewichtsteile" zu verstehen. Die Schlagfestigkeit wurde jeweils nach ASTM D 2794 in inch x pound gemessen. Der Auftrag erfolgt in allen Beispielen auf ein entfettetes Stahlblech nach UNICHIM, d.h. einer italienischen Norm für die Prüfung von Farben. Der Glanz wird stets nach Gardner in % mit einem Einfallswinkel von 60° gemessen. Im übrigen sind % Gewichtsprozent.

Beispiele

1) 276 Teile eines carboxylgruppenhaltigen gesättigten Polyesterharzes aus zwei- und dreiwertigen Alkoholen und mehrbasischen aromatischen und aliphatischen Carbonsäuren (ALFTALAT VAN 9949/1 der Hoechst Sara S.p.A.) mit einer SZ von etwa 80, 264 Teile Beckopox VEP 2354, d.i. ein Epoxydharz aus Epichlorhydrin und Bisphenol A, mit einem Epoxy-Äquivalent von ungefähr 800, 60 Teile eines carboxylgruppenhaltigen Polyurethan-Präpolymeren mit Isocyanatgruppen, die mit ε-Caprolactam verkappt sind, auf Basis eines aliphatischen Polyisocyanats, mit einer SZ von etwa 30, etwa 13,9% NCO und einem Schmelzpunkt von etwa 85—90°C (Indurente 4426 der Hoechst Sara S.p.A.), 10 Teile eines silikonfreien Verlaufmittels auf Polyacrylatbasis (Additol XL 490, 100%, der Hoechst AG), 4 Teile Benzoin, 86 Teile Permanentweiß (Bariumsulfat) und 300 Teile $TiO_2$—R—85, ein Rutil-Titandioxydpigment der Firma TDF-TIOFINE-BV, Holland, werden sehr gut miteinander vermischt und dann in einem Extruder bei 90—100°C homogenisiert. Nach dem Erkalten wird der Strang in einer Mühle zermahlen und zusätzlich gesiebt, so daß man Pulverlacke mit einer unter 100 um liegenden Korngrösse erhält.

Das so erhaltene Produkt wird mit einer elektrostatischen Pistole bei 10—90 KV auf ein entfettetes Stahlblech aufgetragen und bei 180°C für 30 Minuten eingebrannt. Man erhält eine etwa 60 um dicke Lackschicht mit einem Glanz über 90%, mit ausgezeichnetem Verlauf, einer Elastizität von 8 mm bei der Erichsen-Tiefung, direkter und indirekter Schlagfestigkeit 160 mit guter Lösungsmittelbeständigkeit und mit der BLeistifthärte 2—3H. Das eingebrannte Produkt enthält noch 0,7 8% Carboxylgruppen.

2) 466 Teile eines hydroxylgruppenhaltigen gesättigten Polyesterharzes aus zwei- und dreiwertigen Alkoholen und mehrbasischen aromatischen und aliphatischen Carbonsäuren (ALFTALAT VAN 9939/1 der Hoechst Sara S.p.A.) mit einer OH-Zahl von 40—60, 124 Teile des im Beispiel 1 genannten Polyurethans, 10 Teile PT 810, d.i. ein Trisglycidylisocyanurat der CIBA GEIGY, Basel (CH), 10 Teile des im Beispiel 1 verwendeten Verlaufmittels, 4 Teile Benzoin, 86 Teile Permanentweiss und 300 Teile $TiO_2$—R—85 werden auf die gleiche Art wie in Beispiel 1 beschrieben, verarbeitet. Das so erhaltene Material zeigt nach Auftragen nach dem Wirbelsinterverfahren auf ein entfettetes Stahlblech und nach 20 Minuten Einbrennen bei 190°C hervorragende chemische und mechanische Eigenschaften. Der eingebrannte Film enthält keinen Überschuß an Carboxylgruppen.

3) 500 Teile eines carboxylgruppenhaltigen gesättigten Polyesterharzes aus zwei- und dreiwertigen Alkoholen und mehrbasischen aromatischen und aliphatischen Carbonsäuren (ALFTALAT 0131 der Hoechst Sara S.p.A.) mit einer SZ von etwa 35 und noch einem geringem Anteil an freien Hydroxylgruppen sowie einem FP von 75 bis 80°C, 80 Teile des im Beispiel 1 genannten Präpolymeren, 42 Teile PT 810 (siehe Beispiel 2), 10 Teile des im Beispiel 1 genannten Verlaufmittels, 5 Teile Benzoin, 85 Teile Permanentweiss und 300 Teile $TiO_2$—R—85 werden wie in Beispiel 1 beschrieben verarbeitet. Das so erhaltene Material ergibt nach Auftragen mit einer elektrostatischen Pistole auf ein entfettetes Stahlblech und nach 30 Minuten Einbrennen bei 180°C einen Lackfilm von hervorragenden chemischen und mechanischen Eigenschaften.

4) 458 Teile eines Polyesterharzes mit freien Carboxylund Hydroxylgruppen, hergestellt durch Umsetzung von einer Hydroxycarbonsäure und mehrwertigen Alkoholen mit aromatischen und aliphatischen mehrbasischen Carbonsäuren (ALFTALAT VAN 0498 der Hoechst Sara S.p.A.) mit SZ von etwa 15, OH-Zahl von ungefähr 50 und FP 83—85°C, 21 Teile PT 810 (siehe Biespiel 2), 121 Teile des in Beispiel 1 verwendeten Polyurethans, 10 Teile des im Beispiel 1 verwendeten Verlaufmittels, 85 Teile Permanentweiss und 300 Teile $TiO_2$—R—85 werden wie in Beispiel 1 beschrieben verarbeitet. Das so erhaltene Material ergibt nach Auftragen mit einer elektrostatischen Pistole auf ein entfettetes Stahlblech und nach 30 Minuten Einbrennen bei 180°C einen glatten und glänzenden Lackfilm von 40 µm Dicke mit hervorragender Haftung auf dem Metall und mit einer Elastizität von 10 mm bei der Erichsen-Tiefung, der keinen Überschuß an Carboxylgruppen enthält.

5) 270 Teile des im Beispiel 1 genannten Carboxylgruppen enthaltenden gesättigten Polyesterharzes, 270 Teile des im Beispiel 1 genannten Epoxyharzes, 40 Teile eines carboxylgruppenhaltigen Polyurethan-Präpolymeren mit Isocyanatgruppen, die mit ε-Caprolactam verkappt sind, auf Basis eines aliphatischen Polyisocyanats (Indurente 0546 der Hoechst Sara S.p.A.) mit SZ von etwa 10, ungefähr 15% NCO und FP von ungefähr 75 bis 85°C, 56 Teile eines gesättigten Polyesterharzes mit freien Hydroxylgruppen, erhalten aus zwei- und dreiwertigen Alkoholen und aromatischen mehrbasischen Carbonsäuren (ALFTALAT 0592 der Hoechst Sara S.p.A.) mit SZ von etwa 3 und OH-Zahl von etwa 50, 4 Teile eines silikonfreien Verlaufmittels auf Polyacrylatbasis (Additol VXL 5919 der Vianova Kunstharz AG, Graz, Österreich), 5 Teile Benzoin and 355 Teile $TiO_2$—R—85 werden wie in Beispiel 1 beschrieben verarbeitet. Das so erhaltene Material ergibt nach Auftragen mit einer elektrostatischen Pistole bei 10—90 KV auf ein entfettetes Stahlblech und nach 20 Minuten Einbrennen bei 180°C einen Lackfilm von etwa 30 µm mit einem Glanz von über 90%, mit ausgezeichnetem Verlauf, einer Elastizität von 9,5 mm bei der Erichsen-Tiefung, direkter und indirekter Schlagfestigkeit über 160; mit guter Lösungsmittelbeständigkeit und mit der Bleistifthärte 2H. Der eingebrannte Film enthält noch 0,45% Carboxylgruppen.

6) 400 Teile eines Epoxydharzes aus Epichlorhydrin und Bisphenol A mit einem Epoxy-Äquivalent 875—975, 200 Teile des im Beispiel 1 verwendeten Polyurethans, 10 Teile des im Beispiel 5 verwendeten Verlaufmittels und 390 Teile $TiO_2$—R—85 werden gemäß Beispiel 1 verarbeitet. Das so erhaltene Material wird mit einer elektrostatischen Pistole auf ein entfettetes Stahlblech aufgebracht und 30 Minuten bei 200°C eingebrannt. Man erhält einen 50 um dicken Lackfilm mit gutem Verlauf, mit einem Glanz von 81%, einer

Elastizität von 7,2 mm bei der Erichsen-Tiefung, direkter Schlagfestigkeit von 160 und indirekter Schlagfestigkeit von 150, einer Bleistifthärte 2H und einer guten Lösungsmittelbeständigkeit. Der eingebrannte Film enthält keinen Überschuß an Carboxylgruppen.

7) 400 Teile des im Beispiel 6 verwendeten Epoxydharzes, 170 Teile des im Beispiel 1 verwendeten Polyurethans, 30 Teile eines aus mehrwertigen Carbonsäuren und deren Anhydriden aufgebauten Harzes (Additol VXL 1524 der Hoechst AG) mit SZ von etwa 420 und einer Anhydridzahl von 270, 15 Teile des im Beispiel 5 verwendeten Verlaufmittels und 385 Teile $TiO_2$—R—85 werden wie im Beispiel 1 beschrieben, verarbeitet. Das so erhaltene Material wird mit einer elektrostatischen Pistole auf ein entfettetes Stahlblech aufgebracht und durch 30 minütiges Einbrennen bei 200°C gehärtet. Der so erhaltene 50 µm dicke Lackfilm zeigt einen guten Verlauf, ist halbmatt, hat einen Glanz von 68%, eine Elastizität von 5,5 mm bei der Erichsen-Tiefung, eine direkte und indirekte Schlagfestigkeit von 120, eine Bleistifthärte 3H und eine hervorragende Lösungsmittelbeständigkeit. Der eingebrannte Film enthält keinen Überschuß an Carboxylgruppen.

**Patentansprüche**

1. Gegenstände, die mit einem wärmehärtenden Pulverlack lackiert sind, der ein homogenes Gemisch ist aus

I) einem festen polymeren Bindemittel, das eine Kombination ist von

A) einem carboxylgruppenhaltigen Polyurethan-Präpolymeren, gebildet durch die Reaktion

$$xM—H+(OCN)_x—R^1—(NCO)_y+(HO)_y—R^2—(COOH)_n \rightarrow (MCONH)_x—R^1—(NHCOO)_y—R^2—(COOH)_n,$$

worin

M—H eine ein aktives Wasserstoffatom enthaltende, zur Reaktion mit einem Isocyanat befähigte Verbindung ist,

$R^1$ und $R^2$ gleiche oder verschiedene aliphatische, cycloaliphatische oder aromatische Reste sind und

x, y und n gleiche oder verschiedene ganze Zahlen von 1 bis 15, vorzugsweise von 1 bis 10 sind, deren Summe höchstens 30, vorzugsweise höchstens 15 beträgt, das 1 bis 40 Gew.-% mit anderen Verkappungsmitteln als solchen mit einer >NOH-Gruppe verkappte Isocyanatgruppen enthält und eine Säurezahl von 1 bis 80 hat, wobei der Restgehalt an nicht verkappten Isocyanatgruppen vorzugsweise nicht mehr als 0,5 Gew.-% freies NCO beträgt, mit

B) wenigstens einer homo- und/oder heterofunktionellen Verbindung, die entweder Hydroxylgruppen enthält oder diese durch Reaktion bilden kann, wobei die Kombination in der Weise erfolgt ist, daß in den vernetzten Produkten der Gehalt an COOH-Gruppen nicht höher als 0,718% vom Gewicht der Komponenten A) und B) ist, mit

II) mindestens einem üblichen Zusatzstoff wie Füllstoffen, Pigmenten, Thixotropiemitteln, Katalysatoren, Verlaufmitteln Oxidationshemmern und Farbstoffen

2. Verfahren zur Herstellung von Beschichtungen auf Metallsubstraten, dadurch gekennzeichnet, daß ein Pulverlack, der ein homogenes Gemisch der im Anspruch 1 genannten Komponenten I) und II) darstellt, auf ein Substrat aufgebracht und dann bei einer Temperatur über 100°C, vorzugsweise bei 140 bis 220°C, zu einer Beschichtung eingebrannt wird, in der Gehalt an COOH-Gruppen nicht höher als 0,718% bezogen auf das Gewicht der Komponenten A) und B) ist.

3. Ausführungsform nach Anspruch 1, dadurch gekennzeichnet, daß das Präpolymere A) zwischen 7 und 20 Gew.-% verkappte Isocyanatgruppen enthält.

4. Ausführungsform nach Anspruch 1 oder 3, dadurch gekennzeichnet, daß das Präpolymere A) eine Säurezahl von 5 bis 80 hat.

5. Ausführungsform nach einem oder mehreren der Ansprüche 1, 3 oder 4, dadurch gekennzeichnet, daß das Polyurethan-Präpolymere in der Weise aufgebaut ist, daß die nicht verkappten Isocyanatgruppen des als Ausgangsmaterial verwendeten Polyisocyanats durch Hydroxylgruppen im wesentlichen kompensiert sind mit dem Ergebnis, daß wenigstens oligomere Produkte vorliegen.

6. Ausführungsform nach einem oder mehreren der Ansprüche 1, 3, 4 oder 5, dadurch gekennzeichnet, daß die Komponente B) Gruppen enthält, die ohne Bildung von flüchtigen Verbindungen mit Carboxylgruppen reagieren können.

7. Ausführungsform gemäß einem oder mehreren der Ansprüche 1, 3—5 oder 6, dadurch gekennzeichnet, daß noch ein aromatisches Diketon in einer Menge von 0,1 bis 3, insbesondere 0,2 bis 2 Gew.-%, bezogen auf das Bindemittel, zugegen ist.

8. Ausführungsform nach einem oder mehreren der Ansprüche 1, 3, bis 7 oder 7, dadurch gekennzeichnet, daß das Substrat ein Metall ist.

**Revendications**

1. Articles caractérisés en ce qu'ils sont revêtus d'une pellicule d'une peinture d'un vernis en poudre thermodurcissable qui est un mélange homogène constitué:

I) d'un liant polymère solide consistant en une combinaison de:

A) un prépolymère de polyuréthane contenant des groupes carboxy, qui a été formé par la réaction:

$$xM—H+(OCN)_x—R^1—(NCO)_y+(HO)_y—R^2—(COOH)_n \rightarrow (MCONH)_x—R^1—(NHCOO)_y—R_2—(COOH)_n$$

dans laquelle:

— M—H représente un composé qui contient un atome d'hydrogène actif et qui est apte à réagir avec un groupe isocyanate;
— $R^1$ et $R^2$ représentent des groupes identiques ou différents, aliphatiques, cyclo-aliphatiques ou aromatiques; et
— x, y, et n représentent des nombres entiers identiques ou différentes, de 1 à 15, de préférence de 1 à 10, dont la somme est au plus égale à 30, de préférence au plus égale à 15;

et qui contient de 1 à 40% en poids de groupes isocyanato masqués par des agents de masquage autres que ceux contenant un groupe >NOH, et présente un indice d'acide de 1 à 80, la teneur résiduelle en groupes isocyanato non masqués étant de préférence inférieure à 0,5% en poids de NCO libre, et de:

B) au moins un composé homo et/ou hétérofonctionnel qui ou bien contient des groupes hydroxy ou bien peut former de tels groupes hydroxy par une réaction, la combinaison étant obtenue de telle sorte que, dans les produits réticulés, la teneur en groupes COOH ne dépasse pas 0,718% par rapport au poids des composants A) et B), et:

II) d'au moins un additif classique tel que charges, pigments, agents de thixotropie, catalyseurs, agents de nivellement, anti-oxydants et colorants.

2. Procédé de fabrication de revêtements sur des substrats métalliques, caractérisé en ce que l'on applique sur un substrat une peinture ou un vernis en poudre, qui consiste en un mélange homogène des composants I) et II) décrits dans la revendication 1, et en ce que l'on effectue ensuite une cuisson à une température supérieure à 100°C, de préférence à 140—220°C, pour obtenir un revêtement dans lequel la teneur en groupes COOH n'est pas supérieure à 0,718% par rapport au poids des composants A) et B).

3. Articles selon la revendication 1, caractérisés en ce que le prépolymère A) contient entre 7 et 20% en poids de groupes isocyanato masqués.

4. Articles selon l'une des revendications 1 et 3, caractérisés en ce que le prépolymère A) présente un indice d'acide de 5 à 80.

5. Articles selon l'une quelconque des revendications 1, 3 et 4, caractérisés en ce que le prépolymère de polyuréthane est préparé de telle manière que les groupes isocyanato non masqués du polyisocyanate utilisé comme produit de départ soient essentiellement compensés par des groupes hydroxy, avec pour résultat l'obtention de produits au moins oligomères.

6. Articles selon l'une quelconque des revendications 1, 3, 4 et 5 caractérisés en ce que le composant B) contient des groupes qui peuvent réagir avec des groupes carboxy sans formation de composés volatils.

7. Articles selon l'une quelconque des revendications 1, 3, 4, 5 et 6 caractérisés en ce qu'il y a en outre une dicétone aromatique en une quantité de 0,1 à 3, en particulier de 0,2 à 2% en poids par rapport au liant.

8. Articles selon l'une quelconque des revendications 1, 3, à 6 ou 7, caractérisés en ce que le substrat consiste en un métal.

**Claims**

1. Objects varnished with a heat hardenable pulverulent lacquer which is a homogen mixture consisting of

I) a solid polymer binding agent which is a combination of

A) a polyurethane prepolymer containing carboxyl groups, formed by the following reaction

$$xM—H+(OCN)_x—R^1—(NCO)_y+(HO)_y—R^2—(COOH)_n(MCONH)_x—R^1—(NHCOO)_y—R^2—(COOH)_n,$$

wherein M—H is a compound containing one active hydrogen atom which is capable of reacting with an isocyanate, $R^1$ and $R^2$ are aliphatic, cycloaliphatic or aromatic groups, being equal or different and x, y and n are equal or different integers of from 1 to 15, preferably from 1 to 10, the sum thereof is at most 30,

preferably at most 15, and containing from 1 to 40% by weight of blocked isocyanate groups, which are blocked with other blocking agents than those with 1 >NOH-group and having an acid number in the range of from 1 to 80, the residual amount of free isocyanate groups preferably not exceeding 0.5% by weight of free NCO, with

B) at least one homo- and/or hetero-functional compound, either containing hydroxy groups or being capable of producing hydroxy groups by reaction, wherein the combination is effected in such a way that in the cross-linked products the content of COOH-groups is not higher than 0.718% referred to the weight of the components A) and B), with

II) at least one conventional additive selected from the group consisting of fillers, pigments, thixotropic agents, catalysts, blow agents, or oxidation inhibitors and dyestuffs.

2. Process for the manufacturing of coatings on a metal substrate characterized in that a powder coating composition comprising a homogeneous mixture of components I) and II) as claimed in claim 1 is applied to a substrate and then stoved at a temperature of above 100°C, preferably at 140 to 220°C to yield a coating in which the content of COOH-groups is not higher than 0.718% referred to the weight of components A) and B).

3. Embodiment according to claim 1, characterized in that the prepolymer contains from 7 to 20% by weight of blocked isocyanate groups.

4. Embodiment according to claim 1 or 3, characterized in that the prepolymer A) has an acid number in the range of from 5 to 80.

5. Embodiment according to one or more of claims 1, 3 or 4, characterized in that the polyurethane prepolymer has been produced in a manner such that those isocyanate groups of the basic polyisocyanate component which are not blocked, are substantially compensated by hydroxy groups such that at least oligomeric products are formed.

6. Embodiment according to one of the claims 1, 3, 4 or 5, characterized in that component B) contains groups capable of reacting with carboxyl groups without formation of volatile compounds.

7. Embodiment according to one or more of the claims 1, 3 to 5 or 6, characterized in that an aromatic diketone is present in an amount of from 0.1 to 3, particularly 0.2 to 2% referred to the weight of the binder.

8. Embodiment according to one or more of the claims 1, 3 to 6 or 7, characterized in that the substrate is a metal.